# EUROPEAN PATENT APPLICATION

(11) **EP 3 116 102 A1**
(43) Date of publication of application: **11.01.2017**
(21) Application number: 15758845.0
(22) Date of filing: 28.01.2015
(51) Int. Cl.: H02K 1/27, H02K 1/22

(54) **AXIAL GAP MOTOR**

(30) Priority: 03.03.2014 JP 2014040272
(71) Applicant: Dynax Corporation, Chitose-shi Hokkaido 066-8585 (JP)
(72) Inventor: Takezaki, Kenichi, Chitose-shi Hokkaido 066-8585 (JP); Hino, Wataru, Chitose-shi Hokkaido 066-8585 (JP); Harada, Koji, Chitose-shi Hokkaido 066-8585 (JP)
(74) Representative: Patent- und Rechtsanwälte Ullrich & Naumann
(86) International application number: PCT/JP2015/052321
(87) International publication number: WO 2015/133205

(57) **Abstract**

To reduce eddy current loss occurring to a supporting member of a rotor of an axial gap motor, and improve efficiency of a motor. The axial gap motor of the present invention includes a rotor 10 and stators 20 and 22 arranged opposite to this rotor 10. The rotor has a disk-shaped supporting member 12 on which a plurality of permanent magnet segments 11 is mounted. In the stators 20 and 22, a plurality of field winding slots is arranged for generating a rotating magnetic field.

## Description

The present invention relates to an electric motor, more specifically, to an axial gap motor having a small axial dimension and installable inside a wheel of a vehicle.

A hybrid vehicle and an electric vehicle (EV) are gathering attention due to steep rise in the prices of fossil fuels. In particular, an EV with an in-wheel type axial gap motor built inside the wheel requires no intricate and heavy-weight transmission, contributing to effective utilization of space, cost reduction and weight reduction. As a vehicle that can use such in-wheel type axial gap motor, a 1-seater or 2-seater compact car intended for short-distance travel, also referred to as city commuter, has been gathering attention. Since high performance is required in the in-wheel type driving motor used in the EV vehicle including the city commuter, rare-earth magnets using expensive rare-earth elements have been used so far.

However, prices of rare earth elements have witnessed steep rise in recent times, and it has become difficult to procure the rare earth elements. Therefore, an in-wheel motor for EV that uses ferrite magnet, which is cheaper and easily available, is being considered to be used instead of the rare-earth magnet. Since residual magnetic flux density of ferrite magnet is approximately 30% lower as compared to the rare-earth magnet, decrease in torque is at issue. In order to solve this issue; (1) an axial gap motor type structure was employed with an expectation for increase in torque and thinning in the axial direction; (2) permanent magnets (SPM) were mounted inside a rotor of this structure for maximizing torque and reducing iron loss inside a stator core; (3) further, a prototype of 5 kW size motor structure with a reduction gear installed inside a stator was manufactured in order to effectively utilize space inside the motor, and experiments and researches were positively repeated on operating characteristics thereof. When a prototype of 10 kW size motor (16 poles and 18 slots) was manufactured for further increasing output and was measured on operating characteristics thereof, a problem of increase in eddy current loss inside a conductive metal rotor was ascertained, while this problem was not apparent in the 5kW size motor structure.

Therefore, the present invention has been made in order to solve the above-described problem, and the object of the present invention is to provide an electric motor, especially an axial gap motor, with little eddy current loss.

The above-described problem is solved by an axial gap motor including a disk-shaped supporting member, a plurality of permanent magnet segments, a rotor and a stator. The plurality of permanent magnet segments is attached to the supporting member in a state that the permanent magnet segments are spaced in a circumferential direction at an equal pitch angle between a hub section and an outer peripheral section of the disk-shaped supporting member. The rotor is fixed to an output shaft so as to be rotatable together with the output shaft. The stator is arranged on at least one side of the rotor and opposite to the rotor with a predetermined gap from the rotor. A plurality of field winding slots for generating a rotating magnetic field is spaced on an outer peripheral section of the stator at an equal pitch angle in a circumferential direction. The supporting member of the rotor is composed of non-conductive resin.

The resin may be thermoplastic resin selected from a group including phenol resin, epoxy resin and melamine resin.

The plurality of permanent magnet segments mounted on the supporting member can be embedded inside the supporting member.

A hollow sleeve vertically projecting from a flat surface of the hub section is integrally formed on both sides of one side of the hub section of the supporting member of the rotor. The output shaft penetrates the hollow sleeve so as to rotate together with the rotor.

The hollow sleeve of the supporting member and the output shaft are spline-coupled together and accordingly can be bonded with each other using an adhesive.

A rim member composed of high-strength insulating material may be wound on an outer peripheral section of the supporting member.

This high-strength insulating material may be a resin material reinforced with glass fiber aramid fiber or carbon fiber.

According to the present invention, by reducing eddy current loss that occurs to the supporting member of the rotor arranged between the stators, electrical efficiency of the axial gap motor and mechanical strength of the rotor can be enhanced, thereby achieving weight reduction of the axial gap motor.
FIG. 1 is an exploded perspective view schematically illustrating an embodiment of an axial gap motor of the present invention;
FIG. 2 is a perspective view schematically illustrating a supporting member provided with a plurality of mounting holes for mounting a plurality of permanent magnet segments;
FIG. 3 is a graph illustrating efficiencies of each of a comparative example and a working example under same conditions of rotational speed and torque.

Hereinafter, an embodiment of the present invention will be described in detail with reference to the appending drawings. Still, this embodiment is merely intended to describe the invention, and thus the present invention is not limited to this embodiment.

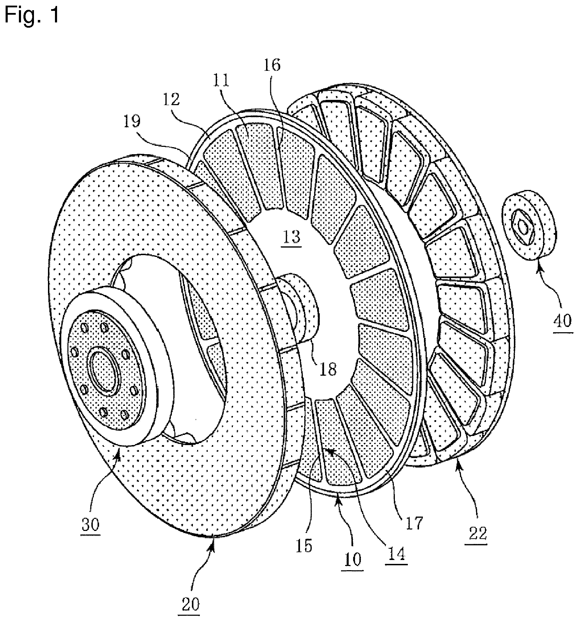

First, FIG. 1 will be referred to. An axial gap motor in accordance with the present invention is illustrated therein. This axial gap motor is mainly composed of a rotor 10 so as to rotate together with an output shaft (not shown in the figure) and stators 20 and 22 arranged on both sides of the rotor 10 and opposite to the rotor 10 with a predetermined gap.

In FIG. 1, a speed reducer 30 connected to the output shaft (not shown in the figure) is arranged in an inner space inside the stator 20, and a resolver 40 is arranged in an inner space inside the other stator 22, configured to detect rotational position of the rotor 10. The stators 20 and 22 are mounted on a housing (not shown in the figure) of the axial gap motor via a suitable means. Such arrangement allows an axial dimension to be smaller and makes it much easier to install the axial gap motor as an in-wheel motor inside a wheel for an EV.

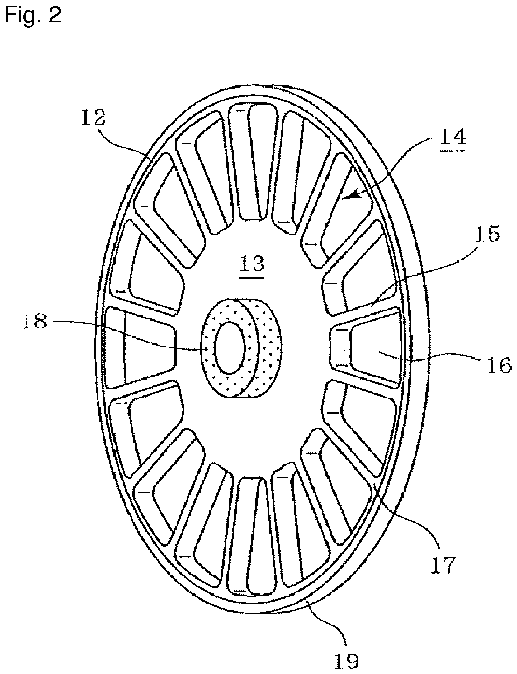

Next, FIG. 2 will be referred to. The rotor 10 of the axial gap motor shown in FIG. 2 includes a disk-shaped supporting member 12 fixed to the output shaft so as to rotate together with the output shaft (not shown in the figure). The supporting member 12 is so-called a coreless rotor composed of a central hub section 13 and an outer peripheral section 14 on which a plurality of magnet segments 11 is mounted. The supporting member 12 is composed of non-conductive resin that may be thermosetting resin such as epoxy resin, phenol formaldehyde resin and melamine resin.

To the hub section 13 at the center of the support member 12, a hollow sleeve 18 is integrally formed for strengthening the connection between the hub part 13 and the output shaft. The hollow sleeve 18 protrudes vertically from a flat surface of the hub section 13 on both sides or one side of the supporting member 12. Through a hollow section of the hollow sleeve 18, the output shaft (not shown in the figure) penetrates the supporting member 12, and the output shaft rotates with the rotor 10 so as to output a rotary motion of the rotor 10. In order to secure an integral rotation of the rotor 10 and the output shaft, a complementary spline groove can be provided between an inner surface of the hollow section of the hollow sleeve 18 of the rotor 10 and an outer surface of the output shaft, and furthermore the both can be glued together with an adhesive. With thickness of the supporting member 12 enough to secure the connection between the supporting member 12 and the output shaft, the above-described hollow sleeve 18 may be omitted so that the planar hub section 13 and the output shaft are connected with each other.

As shown clearly in FIG. 1, the plurality of permanent magnet segments 11 is spaced on the outer peripheral section 14 of the supporting member 12 of the rotor 10 at an equal rotational angle in the circumferential direction. The permanent magnet segments 11 are composed of ferrite magnet not containing expensive rare-earth elements. The magnet segments 11 (not shown in FIG. 2) are fitted and fixed in mounting holes 16 formed on the supporting member 12 so as to have the same shape of the magnet segments 11. An adhesion method using an adhesive can be employed as a fixing methods. Apart from the fixing methods such as fitting and adhesion, another fixing method is applicable. That is to say, after fitting the permanent magnet segments 11 into the mounting holes 16 as described above, the supporting member 12 is sandwiched by a disc-like member of the same dimension and material, and then press-molded so as to embed the permanent magnet segments 11 inside the supporting member 12. In this manner, by embedding the permanent magnet segments 11 inside the supporting member 12, the permanent magnet segments 11 can be fixed firmly and prevented from slipping off. Moreover, since the surface of the supporting member 12 is flat, turbulence generated on the surface when the rotor 10 rotates decreases to improve rotary efficiency of the rotor 10. Also, the above-described hollow sleeve 18 can be formed at the same time of such press-molding.

A predetermined skew angle (angle of a side surface of the magnet segment 11 with respect to a radial axis extending from a central axis) is formed on the side surface of the magnet segment 11 in order to reduce torque ripple and cogging torque, and a planar shape of the magnet segment 11 is substantially trapezoidal. Spoke-shaped parts 15 are formed between the magnet segments 11, and the spoke-shaped parts 15 extend radially from the hub section 13 to an outer peripheral edge 17 of the supporting member 12.

Further, a rim member 19 composed of high-strength insulating material is wound around the outer peripheral edge 17 of the supporting member 12. The high-strength insulating material may be plastic reinforced with glass fiber, aramid fiber or carbon fiber. Such rim member 19 can prevent breakage of the outer peripheral edge 17 due to a centrifugal force occurring, when the rotor 10 rotates, from the permanent magnet segments 11 to the outer peripheral edge 17 of the supporting member 12.
It has been found that the rim member 19 provided in this way enables the supporting member 12 to actually withstand a high-speed rotation (10,000 rpm) burst test (two-fold safety factor).

Table 1 shows results of a characteristics comparison test carried out for the comparative example using the supporting member 12 composed of conductive metal material and the working example, which is the axial gap motor (10 kW), using the supporting member 12 composed of non-conductive resin. As observed from this table, the eddy current loss when the motor of the comparative example rotates at 1,600 rpm is 169.98 W, in contrast to an eddy current loss of 0 W when the motor of the working example rotates at the same 1,600 rpm. The eddy current loss when the motor of the comparative example rotates at 2,800 rpm is 47.75 W, in contrast to an eddy current loss of 0 W when the motor of the working example rotates at the same 2, 800 rpm. Further, the eddy current loss when the motor of the comparative example rotates at 5, 000 rpm was 778.96 W, in contrast to an eddy current loss of 0 W when the motor of the working example rotates at the same 5,000 rpm.

**Table 1**

| | Rotational Speed [rpm] | Torque [Nm] | Output [kW] | Input Power [VA] | Apparent Power [kVA] | Power Factor | Current Density [Arms/m2] | Phase Angle [deg] | Effective Value [Arms] | Amplitude [A] | Iron Loss [W] | Copper Loss [W] | Eddy Current Loss [W] | Efficiency [%] | Efficiency (double) [%] | U-phase Phase Voltage Amplitude [V] | Torque Ripple [%] |
|---|---|---|---|---|---|---|---|---|---|---|---|---|---|---|---|---|---|
| Comparative Example | 1600 | 61.83 | 10.36 | 11.79 | 17.03 | 0.692 | 11.90 | 0.00 | 74.77 | 105.74 | 168.54 | 1095.19 | 169.98 | 87.84 | 85.39 | 107.40 | 2.29 |
| Working Example | 1600 | 62.33 | 10.44 | 11.71 | 16.63 | 0.704 | 11.90 | 0.00 | 74.77 | 105.74 | 167.62 | 1095.19 | 0.00 | 89.21 | 87.95 | 104.87 | 1.43 |
| Comparative Example | 2800 | 17.82 | 5.23 | 5.52 | 5.38 | 1.025 | 3.84 | 27.89 | 24.13 | 34.12 | 130.16 | 114.04 | 47.75 | 94.71 | 91.75 | 105.19 | 2.56 |
| Working Example | 2800 | 17.87 | 5.24 | 5.48 | 5.35 | 1.025 | 3.84 | 27.89 | 24.13 | 34.12 | 130.39 | 114.04 | 0.00 | 95.54 | 93.32 | 104.54 | 2.30 |
| Comparative Example | 5000 | 19.52 | 10.22 | 11.78 | 12.83 | 0.918 | 9.22 | 65.61 | 57.93 | 81.93 | 127.86 | 657.44 | 778.96 | 86.73 | 80.53 | 104.42 | 6.19 |
| Working Example | 5000 | 20.03 | 10.49 | 11.28 | 11.77 | 0.958 | 9.22 | 65.61 | 57.93 | 81.93 | 132.33 | 657.44 | 0.00 | 93.00 | 91.92 | 95.80 | 3.67 |

As described above, according to the present invention, the supporting member 12 of the rotor 10 composed of non-conductive resin can prevent an eddy current that flows when the supporting member 12 is composed of conductive metal material, leading to an eddy-current loss in the motor of 0 W.

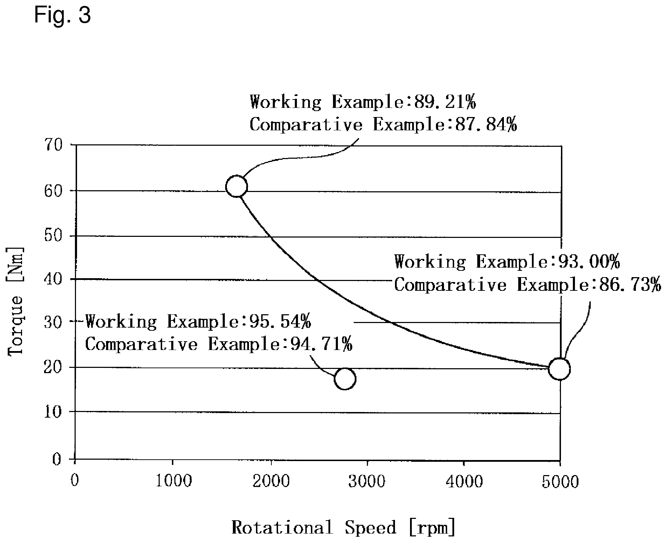

Further, as shown in FIG. 3, at each of the points A, B, C on the graph, respective efficiencies of the motor of the working example and the motor of the comparative example are measured under same conditions of rotational speed and torque. It can be observed from the graph that the efficiencies of the motor of the working example art are higher at all the points.

To each of the stators 20 and 22 arranged with a predetermined gap on both sides of the rotor 10, a plurality of slots and slots between the plurality of slots are spaced at an equal pitch angle in the circumferential direction, so as to be opposed to the magnet segments 11. However, since the structure of the stator of the axial gap motor is well known to those skilled in the art, any description thereof is omitted.

## Claims

1. An axial gap motor having:
a disk-shaped supporting member; and
a plurality of permanent magnet segments mounted on the supporting member, the plurality of permanent magnet segments spaced in a circumferential direction at an equal pitch angle between a hub section and an outer peripheral section of the disk-shaped supporting member,
the axial gap motor comprising:
a rotor fixed to an output shaft so as to rotate together with the output shaft; and
a stator arranged on at least one side of the rotor and opposite to the rotor with a predetermined gap from the rotor,
wherein a plurality of field winding slots for generating a rotating magnetic field is spaced on an outer peripheral section of the stator at an equal pitch angle in a circumferential direction, and
wherein the supporting member of the rotor is composed of non-conductive and thermosetting resin.

2. The axial gap motor according to claim 1 wherein the resin is selected from a group containing epoxy resin, phenol resin and melamine resin.

3. The axial gap motor according to either one of claim 1 or 2 wherein the plurality of permanent magnet segments mounted on the supporting member is embedded inside the supporting member.

4. The axial gap motor according to either one of claims 1 to 3,
wherein a hollow sleeve vertically protruding from a flat surface of the rotor is formed integrally on both sides or one side of the hub section of the supporting member of the rotor, and
wherein the output shaft penetrates the hollow sleeve and connected to the hollow sleeve so as to rotate together with the rotor.

5. The axial gap motor according to either one of claims 1 to 4 wherein the hollow sleeve of the supporting member and the output shaft are spline-coupled and bonded together using an adhesive.

6. The axial gap motor according to either one of claims 1 to 5 wherein a rim member composed of high-strength insulating material is wound on an outer peripheral section of the supporting member.

7. The axial gap motor according to claim 6 wherein the high-strength insulating material is a resin material reinforced with glass fiber, aramid fiber or carbon fiber.
